# EUROPÄISCHE PATENTSCHRIFT

(11) **EP 1 004 162 B1**
(45) Veröffentlichungstag und Bekanntmachung des Hinweises auf die Patenterteilung: **09.07.2003**
(21) Anmeldenummer: 98945064.8
(22) Anmeldetag: 29.07.1998
(51) Int. Cl.: H02H 3/40

(54) **VERFAHREN ZUR ÜBERWACHUNG EINES SCHUTZGERÄTES**
METHOD FOR MONITORING A PROTECTIVE GEAR
PROCEDE POUR SURVEILLER UN APPAREIL DE PROTECTION

(30) Priorität: 12.08.1997 DE 29714298 U; 09.03.1998 DE 19810044
(43) Veröffentlichungstag der Anmeldung: 31.05.2000
(73) Patentinhaber: SIEMENS AKTIENGESELLSCHAFT, 80333 München (DE)
(72) Erfinder: SCHNEERSON, Eduard, D-90765 Fürth (DE); LIEBACH, Thomas, D-90617 Puschendorf (DE)
(86) Internationale Anmeldenummer: DE9802162
(87) Internationale Veröffentlichungsnummer: WO99008356

(56) Entgegenhaltungen:
- DE-A- 2 264 064

## Beschreibung

Die Erfindung bezieht sich auf ein Verfahren zur Überwachung eines Schutzgerätes für ein elektrisches Leiternetz, bei dem aus der Netzspannung ein Spannungssignal und aus dem Leiterstrom ein Stromsignal abgeleitet werden. Sie bezieht sich weiter auf ein nach diesem Verfahren arbeitendes Schutzgerät. Unter Schutzgerät wird hierbei insbesondere ein Distanzschutzgerät verstanden.

Ein Distanzschutzgerät oder Schutzrelais wird üblicherweise in einem Hoch- oder Mittelspannungsnetz eines elektrischen Energieverteilungssystems eingesetzt, um Fehler in einem diesem Distanzschutzgerät zugeordneten Schutzobjekt, nämlich einem Schutz- oder Leitungsabschnitt, zu detektieren. Dazu erfasst das Distanzschutzgerät Strom- und Spannungswerte bezogen auf die zu schützende Leitung oder den Leitungsabschnitt innerhalb des Gesamtnetzes und berechnet daraus die entsprechende Impedanz (vgl. beispielsweise DE 22 64 064 A1).

Bei Auftreten eines Fehlers, z.B. in Form eines Kurzschlusses, innerhalb des überwachten Leitungsabschnitts erzeugt das Distanzschutzgerät ein Auslösesignal und aktiviert damit einen Leistungsschalter, der seinerseits den entsprechenden Leitungsabschnitt vom Gesamtnetz abtrennt. Das Distanzschutzgerät dient zur Lokalisierung des Fehlerortes, indem aus der ermittelten Impedanz die Entfernung des Fehlers von der entsprechenden Messstation bestimmt wird, wobei mit abnehmender Impedanz der Abstand zum Fehler abnimmt.

Das Distanzschutzgerät erhält die Strom- und Spannungswerte über entsprechende Messwandler, deren sekundärseitiger Messstrom- und Messspannungskreis ein dem Betriebs- oder Leiterstrom der zu schützenden Leitung proportionales Stromsignal bzw. ein der Netzspannung proportionales Spannungssignal liefern. Eine Schutz- oder Überwachungseinrichtung, beispielsweise in Form eines Rechners oder Mikroprozessors, bildet aus dem Quotienten aus Spannungs- und Stromsignal die Impedanz (Z) und vergleicht diese mit einem Sollwert (Zₛₒₗₗ). Sinkt im Falle eines Kurzschlusses oder eines Leiterbruchs die Meßspannung und damit die Impedanz, so erfolgt eine Abschaltung des überwachten Leitungsabschnitts, wenn das Auslösekriterium (Z < Zₛₒₗₗ) erfüllt ist.

Problematisch ist das Auftreten eines Fehlers im Meßkreis, insbesondere ein Ausfall des Spannungssignals im Meßspannungskreis (Meßspannungsausfall). Ein solcher Fehler kann z.B. aufgrund eines Kurzschlusses oder eines Leiterbruchs auf der Sekundärseite des Spannungswandlers auftreten. Das Auftreten eines solchen Fehlers führt bei fließendem Betriebsstrom zu einer ungewollten Abschaltung des Schutzobjektes, d.h. der Leitung oder des Leitungsabschnittes, da dann das Auslösekriterium ebenfalls erfüllt ist. Die Überwachungseinrichtung kann in diesem Fall nicht zwischen einem derartigen Fehler im Meßspannungskreis und einem kurzschlußartigen Leitungsfehler in unmittelbarer Nähe des Distanzschutzgerätes unterscheiden, da in beiden Fällen die Meßspannung unterhalb eines Sollwertes liegt oder im Extremfall sogar Null ist. In jedem Fall unterschreitet die daraus abgeleitete Impedanz den Sollwert. Zur fehlerfreien Funktion des Distanzschutzgerätes ist es daher notwendig, unabhängig von der Netzart des zu schützenden Objektes eine eindeutige Unterscheidung zwischen einem Leitungsfehler und einem Fehler im Meßkreis zu gewährleisten.

Ist dem Spannungswandler im Meßspannungskreis ein Schutzschalter zugeordnet, so kann dessen Schaltzustand, z.B. über eine Binäreingabe des Distanzschutzgerätes, zur Auswertung herangezogen werden. Ein entsprechendes Ausschaltsignal des Spannungswandler-Schutzschalters kennzeichnet einen Kurzschluß im Meßspannungskreis und kann daher zur Blockierung der Distanzschutzfunktion genutzt werden. Dadurch kann eine Überfunktion des Distanzschutzgerätes bei kurzschlußartigen Fehlern im Meßspannungskreis verhindert werden. Nachteilig dabei ist, daß mit einem solchen Verfahren nur ein Teil der möglichen Fehler im Meßkreis erkannt werden können. So kann z. B. eine Leiterunterbrechung im Meßkreis nicht erkannt werden.

Bei einem dreiphasigen geerdeten Netz besteht die Möglichkeit einer Überwachung der Nullspannung und des Nullstroms. Eine entsprechende Überwachungseinrichtung könnte dann die Distanzschutzfunktion blockieren, wenn ein einstellbarer Grenzwert der Nullspannung überschritten wird und gleichzeitig kein Nullstrom aufgetreten ist. Nachteilig bei einem derartigen Verfahren ist die eingeschränkte Anwendbarkeit, zumal dieses Prinzip ungünstig in einphasigen Netzen und in Netzen mit nicht geerdetem Sternpunkt ist.

Darüber hinaus reagiert dieses Verfahren fehlerhaft bei dreipoligen Unterbrechungen im Meßspannungskreis, da aufgrund der in diesem Fall fehlenden Nullspannung wiederum eine ungewollte Auslösung des Distanzschutzgerätes erfolgt. In einem digitalen Distanzschutzgerät ist zudem die Blockierung der Schutzfunktion bei einem Meßspannungsausfall häufig automatisch mit der Aktivierung einer Not-Schutzfunktion, vorzugsweise einer Überstromzeit-Schutzfunktion, verbunden.

Der Erfindung liegt die Aufgabe zugrunde, ein Verfahren zum Betreiben eines Schutzgerätes anzugeben, mit dem eine zuverlässige Erfassung eines Fehlers im Meßkreis des Schutzgerätes, insbesondere eines Meßspannungsausfalls im Meßspannungskreis eines Distanzschutzgerätes, gewährleistet ist. Bei einem nach diesem Verfahren arbeitenden Schutzgerät soll eine Überfunktion infolge eines Meßspannungsausfalls sicher vermieden werden.

Bezüglich des Verfahrens wird die Aufgabe erfindungsgemäß gelöst durch die Merkmale des Anspruchs 1. Dabei wird die logische Verknüpfung eines erfaßten Spannungseinbruches und einer Stromsprungerkennung genutzt. Durch eine entsprechende Auswertung des Strom- und Spannungssignals sowie deren logische Verknüpfung ist einerseits eine zuverlässige Unterscheidung zwischen einem Leitungsfehler und einem Ausfall im Meßkreis, insbesondere im Meßspannungskreis eines Distanzschutzgerätes, sichergestellt. Andererseits wird eine Auslösezeitverzögerung bei einem Fehler des überwachten Leitungsabschnitts, insbesondere bei einem Leitungskurzschluß, sicher vermieden.

Bei Erkennung eines Stromsprungs wird auf einen Leitungsoder Netzfehler geschlossen. Die logische Verknüpfung eines den Spannungseinbruch charakterisierenden ersten Erkennungssignals mit einem den Stromsprung charakterisierenden zweiten Erkennungssignal führt zu keiner Blockierung der Schutzfunktion des Schutzgerätes. Dadurch ist eine Unterfunktion des Schutzgerätes sicher vermieden, so daß das Schutzgerät weiterhin einen möglichen Kurzschluß im Netz abschalten kann.

Durch die Überwachung des Spannungssignals und damit der Netzspannung auf Unterschreiten eines einstellbaren Schwellwertes wird gegebenenfalls ein Auslöse- oder Ausgangssignal zur Blockierung des Schutzgerätes ausgegeben, wenn kein Stromsprung detektiert wurde und das Stromsignal eine untere Stromgrenze nicht unterschritten und eine obere Stromgrenze nicht überschritten hat. Dadurch ist eine Überfunktion des Schutzgerätes ebenfalls sicher vermieden.

Dazu wird zweckmäßigerweise das aus dem Kriterium des Stromsprungs abgeleitete zweite Erkennungssignal zeitlich verlängert und invertiert mit dem aus dem Kriterium des Spannungseinbruches abgeleiteten ersten Erkennungssignal logisch verknüpft. Parallel hierzu wird das Stromsignal mit einem unteren Schwellwert, d. h. mit einer unteren Stromgrenze verglichen und ein daraus abgeleitetes drittes Erkennungssignal wird mit dem zweiten Erkennungssignal logisch verknüpft. Außerdem wird zweckmäßigerweise das Stromsignal mit einem oberen Schwellwert, d. h. mit einer oberen Stromgrenze verglichen und ein daraus abgeleitetes viertes Erkennungssignal wird mit dem ersten und zweiten Erkennungssignal logisch verknüpft. Somit werden auch Leiterunterbrechungen im Meßkreis, insbesondere im Meßspannungskreis, erkannt und eine unerwünschte Auslösung der Schutzfunktion verhindert.

Liegt der Wert des überwachten Stromsignals außerhalb einstellbarer Stromgrenzen, so wird die Generierung eines Ausgangssignals und damit eine Blockierung der Schutzfunktion generell verhindert. Die Schutzfunktion ist beim Auftreten von großen Strömen im Kurzschlußstrombereich folglich stets wirksam. Die Schwellwertüberwachung mit Generierung entsprechender Erkennungssignale verhindert somit eine unerwünschte Blockierung der Schutzfunktion bei Netzkurzschlüssen. Zusätzlich ist die Schutzfunktion und damit der Distanzschutz generell wirksam bei sehr kleinen Werten des Stromsignals und wird durch die Überwachung nicht blockiert oder deaktiviert. Der ausgeschaltete Zustand der Anlage, d.h. der Leitung, ist somit ebenfalls berücksichtigt.

In zweckmäßiger Weiterbildung wird das anhand der Erkennungssignale erzeugte Ausgangssignal sowohl zur Blockierung des Schutzgerätes oder der Distanzschutzfunktion als auch zur Aktivierung einer Not-Schutzfunktion verwendet. Die durch dieses Kriterium erkannte Fehlfunktion oder Störung des Schutzgerätes wird dann zweckmäßigerweise während einer einstellbaren Zeitdauer gemeldet. Sobald das Spannungssignal einen diesem zugeordneten Schwellwert wieder überschreitet oder das Stromsignal einen diesem zugeordneten Schwellwert unterschreitet, wird das anhand der Erkennungssignale erzeugte Ausgangssignal zur Blockierung des Schutzgerätes wieder deaktiviert. Die Überwachung nimmt somit wieder ihren Ausgangszustand ein, wenn die Spannungswiederkehr erkannt wird oder der Wert des Stromsignals eine Minimalstromgrenze unterschreitet.

Das Verfahren eignet sich sowohl für ein einphasiges und zweiphasiges Netz als auch für ein dreiphasiges Netz mit geerdetem Sternpunkt. Dabei erfolgt die Stromsprungerkennung phasenabhängig oder phasenbezogen. Zur Überwachung eines dreiphasigen Netzes mit isoliertem oder kompensiertem Sternpunkt wird zweckmäßigerweise zusätzlich die Verlagerungsspannung in die logische Verknüpfung einbezogen. Dazu wird aus einem Vergleich der Verlagerungsspannung mit einem Schwellwert ein weiteres Erkennungssignal erzeugt und mit zumindest dem ersten und zweiten Erkennungssignal verknüpft. Dabei ist die Überwachung nur dann wirksam, wenn der einstellbare Schwellwert von der aktuell erfaßten Verlagerungsspannung nicht überschritten wird.

Bezüglich des Schutzgerätes wird die genannte Aufgabe erfindungsgemäß gelöst durch die Merkmale des Anspruchs 10. Vorteilhafte Ausgestaltungen sind Gegenstand der auf diesen rückbezogenen Unteransprüche.

Dazu umfaßt das Schutzgerät eine Überwachungseinrichtung, die mit einem Meßkreis zur Umwandlung des Leiter- oder Betriebsstroms und der Netzspannung in dazu proportionale Strom- bzw. Spannungssignale verbunden ist, und die mittels einer Anzahl logischer Schaltglieder aus dem Spannungssignal und aus dem Stromsignal ein Auslöse- oder Ausgabekriterium zur Blockierung des Schutzgerätes generiert. Dazu ist ein erstes UND-Glied zur Verknüpfung eines aus dem Spannungssignal erzeugten ersten Erkennungssignals mit einem aus dem Stromsignal abgeleiteten zweiten Erkennungssignal vorgesehen. Dem ersten UND-Glied wird zweckmäßigerweise über ein Vergleichs- oder Kippglied ein aus einer Abweichung des Stromsignals von einem oberen Schwellwert abgeleitetes (viertes) Erkennungssignal zugeführt.

Des Weiteren ist vorteilhafterweise ein zweites UND-Glied zur Verknüpfung des zweiten Erkennungssignals mit einem aus einer Abweichung des Stromsignals von einem unteren Schwellwert abgeleiteten (dritten) Erkennungssignal vorgeordnet. Ein diesem zweiten UND-Glied wiederum vorgeordnetes Zeitglied dient zur zeitlichen Verlängerung des zweiten Erkennungssignals und damit des Stromsprungs. Nach Erkennung eines Stromsprungs wird mittels des Zeitgliedes eine Zeitstufe in der Überwachungseinrichtung gestartet, die bis zu einem vorgebbaren Zeitablauf die Ausgabe eines Ausgangssignals zur Blockierung des Schutzgerätes verhindert. Die Zeitspanne ist zweckmäßigerweise länger als die längste Staffelzeit des Schutzgerätes, um im Kurzschlussfall die Überwachungseinrichtung sicher zu sperren.

Um das Ausgabekriterium zur Blockierung des Schutzgerätes auch dann noch aufrechtzuerhalten, wenn mit Ausnahme des Kriteriums des Stromsprungs alle anderen Kriterien zur Blockierung des Schutzgerätes weiterhin erfüllt sind, ist das erste UND-Glied ausgangsseitig mit einem seiner Eingänge über ein ODER-Glied verbunden, dem wiederum eingangsseitig das zweite Erkennungssignal für einen Stromsprung zugeführt ist. Dadurch ist sichergestellt, dass das Ausgangssignal auch bei Zeitablauf des Stromsprungs aktiviert bleibt, solange der detektierte Messkreisfehler vorhanden ist. Das Ausgangssignal wird zweckmäßigerweise über ein zweites Zeitglied zur Generierung eines die entsprechende Störung anzeigenden Meldesignals geführt.

Die mit der Erfindung erzielten Vorteile bestehen insbesondere darin, daß durch eine logische Verknüpfung eines erfaßten Spannungseinbruchs und einer Stromsprungerkennung eine zuverlässige Überwachung eines Schutzgerätes, insbesondere eines Distanzschutzgerätes, ohne Einschränkung der schnellen Reaktionszeit gegeben ist. Die Überwachung ermöglicht eine zuverlässige Unterscheidung zwischen einem Anlagen- oder Leitungsfehler, d.h. einem Fehler im überwachten Schutzobjekt, und einer Störung im Meßkreis des Schutzgerätes, insbesondere aufgrund eines Kurzschlusses oder einer Leiterunterbrechung im Meßspannungskreis. Dabei wird eine Auslösezeitverzögerung bei einem Netz- oder Leitungskurzschluß sicher verhindert. Das beschriebene Verfahren und das entsprechende Schutzgerät eignen sich sowohl für einphasige als auch für mehrphasige Netzanlagen, wobei sowohl eine Überfunktion als auch eine Unterfunktion des Schutzgerätes sicher vermieden ist. Eine bevorzugte Anwendung ist der Distanzschutz, z.B. in der Bahntechnik.

Nachfolgend werden Ausführungsbeispiele der Erfindung anhand einer Zeichnung näher erläutert. Darin zeigen:
- FIG 1: schematisch ein Schutzgerät mit einer Überwachungs- einrichtung,
- FIG 2: die Überwachungseinrichtung für ein einphasiges Netz,
- FIG 3: die Überwachungseinrichtung für ein dreiphasiges Netz mit geerdetem Sternpunkt, und
- FIG 4: die Überwachungseinrichtung für ein dreiphasiges Netz mit kompensiertem oder isoliertem Sternpunkt.

Einander entsprechende Teile sind in allen Figuren mit den gleichen Bezugszeichen versehen.

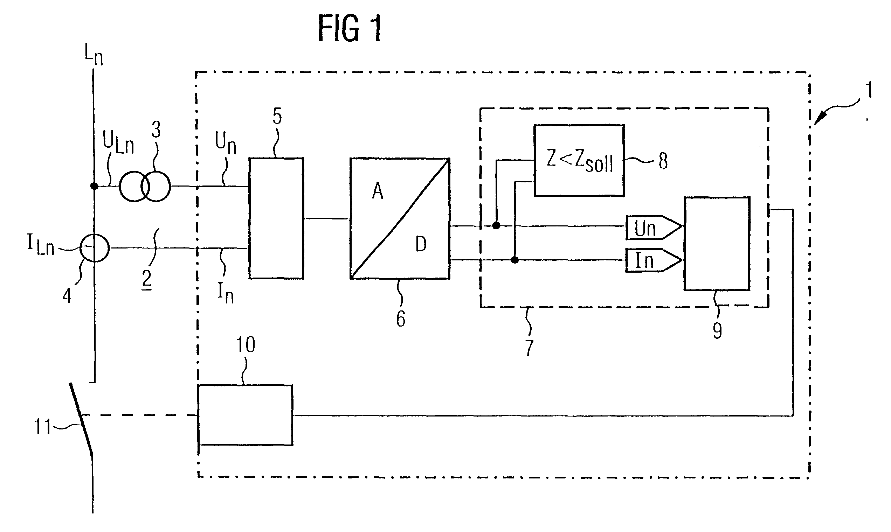

FIG 1 zeigt schematisch ein Schutzrelais oder Distanzschutzgerät 1 als Schutzeinrichtung für ein ein- oder mehrphasiges elektrisches Leitungsnetz mit einer der Anzahl der Phasen entsprechenden Anzahl von Leitungen oder Leitungsabschnitten Lₙ. Über einen Meßkreis 2 mit einem Spannungswandler 3 und mit einem Stromwandler 4 werden dem Distanzschutzgerät 1 ein der Netzspannung U_{Ln} der jeweiligen Phase L_{1..n} proportionales Spannungssignal Uₙ und ein dem Leiter- oder Betriebsstrom I_{Ln} in diesem Leitungsabschnitt Lₙ proportionales Stromsignal Iₙ zugeführt.

Innerhalb des Distanzschutzgerätes 1 werden diese Signale Uₙ, Iₙ über einen Filter 5 des Meßkreises 2 einem Analog-Digital-Wandler 6 zugeführt, der die analogen Signale Uₙ, Iₙ in digitale Signale umwandelt. Die digitalisierten Signale Uₙ, Iₙ werden in einem Rechner oder Mikroprozessor 7 einer Impedanzstufe 8 und einer Überwachungseinrichtung 9 zugeführt. Der Rechner 7 ist ausgangsseitig mit einem Ausgangs- oder Schutzrelais 10 verbunden, das mit einem in der zu schützenden Leitung Lₙ liegenden Leistungsschalter 11 gekoppelt ist.

Die Impedanzstufe 8 des Rechners 7 bildet den Quotient aus dem Spannungssignal Uₙ und dem Stromsignal Iₙ und vergleicht die so ermittelte Impedanz Z mit einem vorgegebenen Grenzwert Zₛₒₗₗ. Ist das Auslösekriterium Z < Zₛₒₗₗ erfüllt, so wird das Relais 10 angesteuert und der Leistungsschalter 11 öffnet. Mittels dieser Schutzfunktion wird im Falle eines Netzkurzschlusses der entsprechende Leitungsabschnitt Lₙ vom elektrischen Gesamtnetz abgetrennt. Dieses Auslösekriterium ist auch erfüllt, wenn der Fehler oder die Störung, d.h. der Kurzschluß oder die Unterbrechung, im Meßkreis 2 zwischen den Wandlern 3,4 und den Verarbeitungsstufen, z. B. dem Filter 5, dem Analog-Digital-Wandler 6 oder dem Rechner 7, des Distanzschutzgerätes 1 aufgetreten ist.

Zur Erfassung derartiger Fehler im Meßkreis 2, insbesondere im Meßspannungskreis zur Generierung des Spannungssignals Uₙ, wertet die Überwachungseinrichtung 9 das Spannungssignal Uₙ (Meßspannungssignal) und das Stromsignal Iₙ (Meßstromsignal) durch logische Verknüpfung aus. Diese Auswertung gewährleistet eine sichere Unterscheidung zwischen einem Netz- oder Anlagenfehler und einem Ausfall im Meßkreis 2.

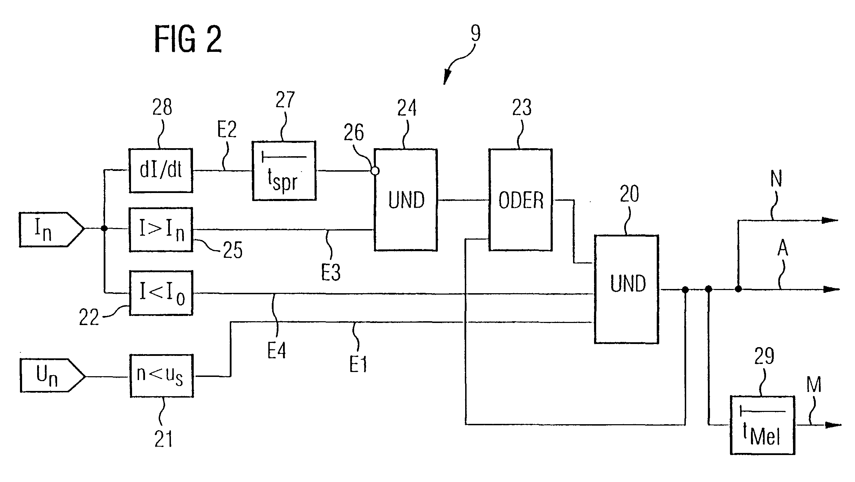

FIG 2 veranschaulicht die Art und Weise der logischen Verknüpfung des Spannungssignals Uₙ und des Stromsignals Iₙ für ein einphasiges Netz. Dazu weist die Überwachungseinrichtung 9 ein erstes UND-Glied 20 auf, das eingangsseitig mit einem ersten Kippglied 21 zum Vergleichen des Spannungssignais Uₙ mit einem ersten Schwellwert Uₛ verbunden ist. Des weiteren ist das UND-Glied 20 eingangsseitig mit einem zweiten Kippglied 22 zum Vergleichen des Stromsignals Iₙ mit einem oberen Schwellwert oder einer oberen Stromgrenze Iₒ verbunden. Ferner ist das UND-Glied 20 über ein ODER-Glied 23 mit einem zweiten UND-Glied 24 verbunden, das eingangsseitig mit einem dritten Kippglied 25 zum Vergleichen des Stromsignals Iₙ mit einem unteren Schwellwert oder einer unteren Stromgrenze Iᵤ verbunden ist.

Ein invertierender Eingang 26 des zweiten UND-Gliedes 24 ist über ein erstes Zeitglied 27 mit einem Differenzierglied 28 zur Bildung des Differentialquotienten dI/dt des Stromsignals Iₙ verbunden. Mittels des Differenziergliedes 28 wird innerhalb eines definierten Zeitintervalls dt eine sprungartige Stromänderung dI (Stromsprung) detektiert. Das erste UND-Glied 20 ist ausgangsseitig mit einem Eingang des ODER-Gliedes 23 und mit einem zweiten Zeitglied 29 verbunden.

Beim Betrieb des Schutzgerätes 1 wird das aus der Netzspannung U_{Ln} abgeleitete Spannungssignal Uₙ zunächst im Kippglied 21 mit dem einstellbaren Schwellwert Uₛ verglichen. Im Ergebnis dieses Vergleichs wird ein erstes Erkennungssignal E1 in Form eines Binärcodes an das erste UND-Glied 20 geführt. Solange das Spannungssignal Uₙ den Schwellwert Uₛ überschreitet, ist der dem Erkennungssignal E1 zugeordnete Eingang des UND-Gliedes 20 logisch "0". Analog wird das aus dem Betriebsstrom I_{Ln} abgeleitete Stromsignal Iₙ im Kippglied 22 mit der oberen Stromgrenze Iₒ verglichen und ein daraus abgeleitetes (viertes) Erkennungssignal E4 wird wiederum in Form eines Binärcodes dem UND-Glied 20 zugeführt. Solange das Stromsignal Iₙ diese obere Stromgrenze Iₒ unterschreitet, liefert das Erkennungssignal E4 eine logische "1" an das UND-Glied 20. Mittels des Kippgliedes 25 wird das Stromsignal Iₙ auf Überschreiten der unteren Stromgrenze Iᵤ überwacht. Gegebenenfalls führt ein daraus abgeleitetes (drittes) Erkennungssignal E3 eine logische "1" an das zweite UND-Glied 24.

Bei Detektion eines Stromsprungs dI/dt im Differenzierglied 28 wird ein durch ein zweites Erkennungssignal E2 charakterisierter Binärcode dem invertierenden Eingang 26 des zweiten UND-Gliedes 24 zugeführt. Zuvor wird nach Erkennen eines Stromsprungs dI/dt die Zeitstufe 27 gestartet. Für die Dauer einer einstellbaren Zeit (Sprungzeit) tₛₚᵣ wird der entsprechende Binärcode im UND-Glied 24 mit dem Erkennungssignal E3 verknüpft. Aufgrund der Invertierung des zweiten Erkennungssignals E2 geht der Ausgangszustand des UND-Gliedes 24 nur dann in einen aktivierten Zustand und damit von logisch "0" auf logisch "1" über, wenn kein Stromsprung dI/dt vorhanden ist und das Stromsignal Iₙ die untere Stromgrenze Iᵤ überschreitet. Unterschreiten das Stromsignal Iₙ gleichzeitig die obere Stromgrenze Iₒ und das Spannungssignal Uₙ den Schwellwert Uₛ (Spannungseinbruch), so geht das erste UND-Glied 20 von seinem Ausgangszustand in einen Auslösezustand über, wobei ein Ausgangssignal A zur Blockierung der Distanzschutzfunktion erzeugt wird. In diesem Fall sind alle Eingänge des UND-Gliedes 20 logisch "1". Mit anderen Worten: Werden bei einer Unterschreitung des ersten Schwellwertes Uₛ ein Spannungseinbruch Uₙ < Uₛ sowie gleichzeitig kein zum Starten des Zeitgliedes 27 führender Stromsprung dI/dt detektiert und liegt dabei das Stromsignal Iₙ innerhalb der Stromgrenzen Iᵤ,Iₒ, so erfolgt aufgrund der logischen Verknüpfung der Erkennungssignale E1 und E2 im UND-Glied 20 die Ausgabe des Ausgangssignals A als Blockiersignal.

Gleichzeitig wird für die Dauer einer einstellbaren Meldezeit t_{Mel} ein Meldesignal M erzeugt, das die Störung im Meßkreis 2, beispielsweise einen Kurzschluß oder eine Leiterunterbrechung im Meßspannungskreis, anzeigt. Des weiteren wird ein Notsignal N zur Aktivierung einer Not-Schutzfunktion erzeugt.

Bei Erkennung eines Stromsprungs dI/dt wird auf einen Netz - oder Anlagenfehler geschlossen und die Überwachungseinrichtung 9 blockiert für die Dauer der Sprungzeit t_{Spr} die Ausgabe eines Ausgangs- oder Blockiersignals A. Die Blockierung erfolgt mittels des zweiten Erkennungssignals E2, da aufgrund der Invertierung über dieses an das erste UND-Glied 20 eine logische "0" geführt wird. Damit kann die Schutzfunktion des Schutzgerätes 1 weiterhin einen möglichen Kurzschluß in der Leitung Lₙ und damit im Netz in Schnellzeit abschalten.

Infolge der logischen Verknüpfung der Erkennungssignale E1 bis E4 wird auch eine Leiterunterbrechung im Meßkreis 2, insbesondere im Meßspannungskreis, erkannt, ein entsprechendes Meldesignal M generiert und eine unerwünschte Auslösung des Schutzgerätes 1 verhindert. Liegt das Stromsignal Iₙ außerhalb der einstellbaren Stromgrenzen Iᵤ,Iₒ, so wird aufgrund der logischen Verknüpfung der Erkennungssignale E1 bis E4 eine Ausgabe des Ausgangssignals A zur Blockierung des Schutzgerätes 1 generell verhindert. Die Schutzfunktion ist beim Auftreten von großen Betriebsströmen I_{Ln} (Kurzschlußstrombereich) folglich stets wirksam. Dadurch ist eine unerwünschte Blockierung der Schutzfunktion bei Netzkurzschlüssen sicher verhindert. Auch ist bei sehr kleinen Leiterströmen I_{Ln} die Schutzfunktion generell wirksam und wird durch die Überwachungseinrichtung 9 nicht blockiert. Der ausgeschaltete Zustand des Leitungsabschnitts Lₙ ist somit ebenfalls berücksichtigt.

Durch die Rückkopplung des Ausgangssignals A über das ODER-Glied 23 bleibt das Ausgangssignal A unabhängig vom Zustand des Erkennungssignals E2 aktiv, bis der Spannungseinbruch aufgehoben ist oder das Stromsignal Iₙ die obere Stromgrenze Iₒ überschreitet.

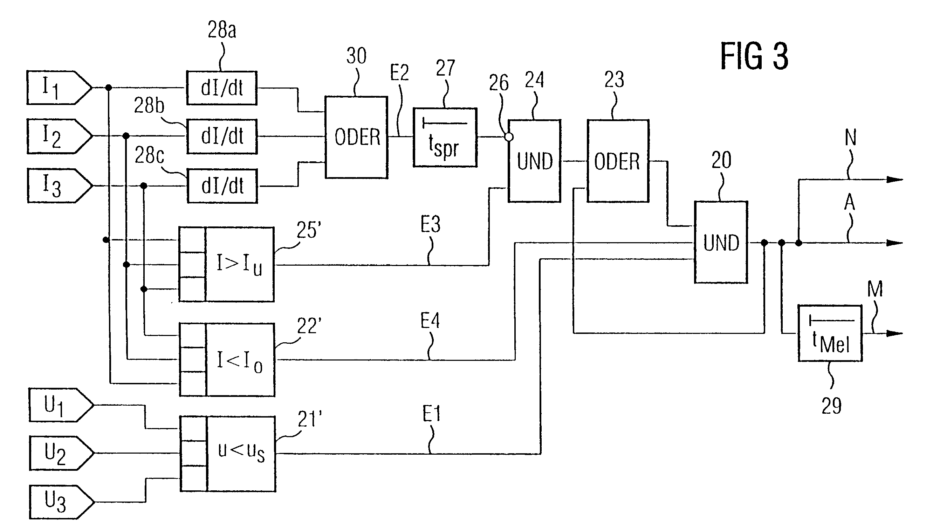

FIG 3 zeigt die logische Verknüpfung der Erkennungssignale E1 bis E4 in der Überwachungseinrichtung 9 bei einem dreiphasigen Netz mit entsprechend drei zu überwachenden Leitungen L₁ bis L₃. Die entsprechenden Spannungssignale U₁ bis U₃ und die entsprechenden Stromsignale I₁ bis I₃ werden im Meßkreis 2 phasenabhängig aus den entsprechenden Netzspannungen U_{Ln} bzw. den entsprechenden Leiterströmen I_{Ln} abgeleitet und über den Analog-Digital-Wandler 6 der Überwachungseinrichtung 9 getrennt zugeführt. In diesem Fall ist das erste Kippglied 21' dreikanalig ausgeführt, wobei das Spannungssignal Uₙ jeder Phase mit dem ersten Schwellwert Uₛ verglichen wird.

Analog erfolgt die Überwachung der Stromsignale I₁ bis I₃ auf eine Grenzwertüberschreitung der Stromgrenzen Iₒ, Iᵤ in dreikanalig ausgeführten Kippgliedern 22' bzw. 25'. Auch ist die Stromsprungerkennung dI/dt dreikanalig ausgeführt, wobei je Phase ein dieser zugeordnetes Differenzierglied 28a,28b,28c vorgesehen ist. Die Differenzierglieder 28a bis 28c sind auf ein gemeinsames ODER-Glied 30 geführt, das wiederum das zweite Erkennungssignal E2 über das Zeitglied 27 dem invertierenden Eingang 26 des zweiten UND-Gliedes 24 zuführt.

Der übrige Aufbau und die Funktionsweise der Überwachungseinrichtung 9 entsprechen denjenigen des Ausführungsbeispiels gemäß FIG 2. Während dort die Überwachungseinrichtung 9 für ein einphasiges Netz ausgelegt ist, berücksichtigt der Aufbau der Überwachungseinrichtung 9 gemäß Fig. 3 die Strom- und Spannungssignale Iₙ bzw. Uₙ eines zwei- oder dreiphasigen Netzes mit geerdetem Sternpunkt.

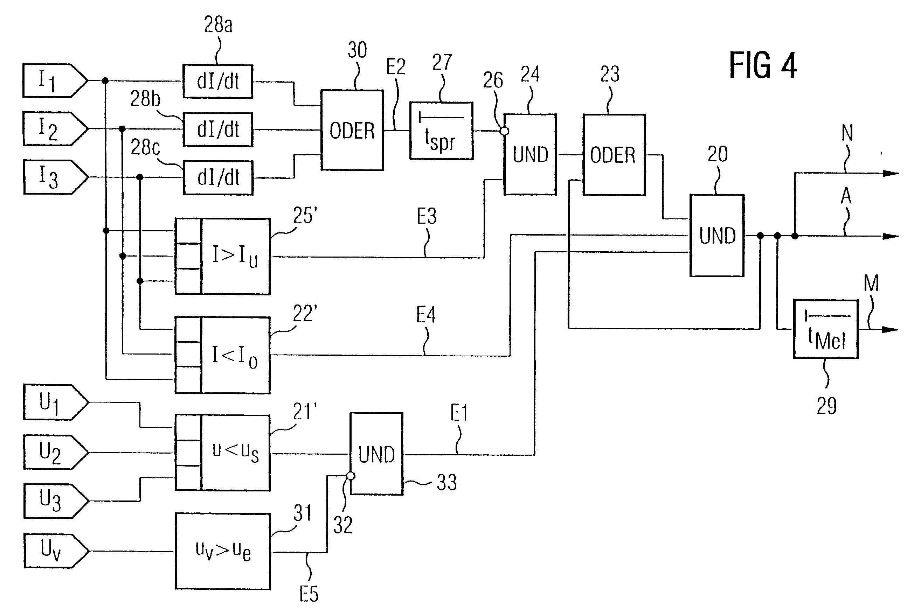

Gemäß FIG 4 wird für ein dreiphasiges Netz mit isoliertem oder kompensiert betriebenem Sternpunkt innerhalb der Überwachungseinrichtung 9 zusätzlich die Verlagerungsspannung Uᵥ überwacht. Dazu ist ein zusätzliches Kippglied 31 vorgesehen, das einem invertierenden Eingang 32 eines dritten UND-Gliedes 33 ein fünftes Erkennungssignal E5 zuführt. Diesem UND-Glied 33 wird außerdem das erste Erkennungssignal E1 eingangsseitig zugeführt. Bei Überschreiten eines zweiten einstellbaren Schwellwertes Uₑ detektiert die Überwachungseinrichtung 9 einen einpoligen Fehler im Netz und sperrt die Erzeugung und Ausgabe des Ausgangssignals A als Blockiersignal.

Wird der Schwellwert Uₑ von der Verlagerungsspannung Uᵥ unterschritten, so wird das erste Erkennungssignal E1 über das UND-Glied 33 zum UND-Glied 20 durchgeschaltet und es wird wiederum ein Ausgangssignal A erzeugt, wenn in keiner der Phasen (L₁ bis L₃) ein Stromsprung aufgetreten ist und gleichzeitig die entsprechenden Stromsignale I₁ bis I₃ innerhalb der einstellbaren Stromgrenzen Iᵤ,Iₒ liegen.

Entsprechend der Funktionsweise der Überwachungseinrichtung 9 für ein einphasiges Netz wird auch im Falle eines mehrphasigen Netzes gemäß den Ausführungsbeispielen nach FIG 3 und 4 das Ausgangssignal A der Überwachungseinrichtung 9 vorzugsweise zur Blockierung der Schutzfunktion des Schutzgerätes 1 verwendet. Das Ausgangssignal A dient des weiteren zur Generierung des Notsignals N und damit zur Aktivierung einer Not-Überstromzeit-Schutzfunktion sowie zur Erzeugung des Meldesignals M. Darüber hinaus fällt die Überwachungseinrichtung 9 unabhängig von der Anzahl der Phasen in ihren Ausgangszustand zurück, wenn eine Spannungswiederkehr aufgrund der erneuten Erfüllung des Kriterium U > Uₛ erkannt wird oder das Stromsignal Iₙ jeder Phase L_{1..n} die untere Stromgrenze Iᵤ (Minimalstromgrenze) unterschreitet.

Die Überwachungseinrichtung 9 kann sowohl in einphasigen Netzen als auch in mehrphasigen Netzen unabhängig von der Sternpunktbehandlung eingesetzt werden. Mittels der Überwachungseinrichtung 9 wird sowohl ein Kurzschluß als auch eine Unterbrechung, z.B. in Form eines Leiterbruchs, im Meßkreis 2 des Schutzgerätes 1 erkannt.

Die Überwachungseinrichtung 9 gemäß dem Ausführungsbeispiel nach FIG 2 wurde in einem Versuch mit einem 16 2/3 Hz-Oberleitungsschutz vom Siemens-Typ 7SA517 mit folgenden Einstelldaten realisiert:
dI/dt = 0,05 I_{N}/60ms
Iₒ = 1, 2 I_{N}
Iᵤ = 0,06 I_{N}
t_{Spr} = 10 s
t_{Mel} = 5 s
Uₛ = 5 V,
wobei I_{N} den Nennbetriebsstrom darstellt. Beim Ausführungsbeispiel gemäß FIG 4 wurde als zusätzlicher Parameter der Schwellwert Uₑ = 50 V verwendet.

Die Verknüpfung eines Spannungseinbruchs (U < Uₛ) und eines Stromsprungs dI/dt ist prinzipiell zur Erkennung und Erfassung eines Meßspannungsausfalls bei den verschiedensten Schutzgeräten im Mittel- und Hochspannungsbereich verwendbar.

## Patentansprüche

1. Verfahren zur Überwachung eines Schutzgerätes (1), insbesondere eines Distanzschutzgerätes, für ein elektrisches Leitungsnetz (Lₙ), bei dem aus der Netzspannung (U_{Ln}) ein Spannungssignal (Uₙ) und aus dem Leiterstrom (I_{Ln}) ein Stromsignal (Iₙ) abgeleitet werden,
**dadurch gekennzeichnet, dass**
- bei einem Spannungseinbruch (Uₙ < Uₛ) aus dem Spannungssignal (Uₙ) ein erstes Erkennungssignal (E1) und bei einem Stromsprung (dI/dt) aus dem Stromsignal (Iₙ) ein zweites Erkennungssignal (E2) abgeleitet wird und
- das erste Erkennungssignal (E1) mit dem zweiten Erkennungssignal (E2) logisch derart verknüpft wird, dass ein Auslösesignal (A) zur Blockierung des Schutzgerätes (1) erzeugt wird, wenn allein das erste Erkennungssignal (E1), nicht jedoch das zweite Erkennungssignal (E2) auftritt.

2. Verfahren nach Anspruch 1,
**dadurch gekennzeichnet, dass**
- das zweite Erkennungssignal (E2) zeitlich verlängert und invertiert wird,
- das Stromsignal (Iₙ) mit einer unteren Stromgrenze (Iᵤ) verglichen und daraus ein drittes Erkennungssignal (E3) abgeleitet wird und
- das zweite Erkennungssignal (E2) mit dem dritten Erkennungssignal (E3) logisch derart verknüpft wird, dass die Erzeugung eines Ausgangssignals (A) zur Blockierung des Schutzgerätes (1) verhindert wird, wenn das Stromsignal (Iₙ) unterhalb der unteren Stromgrenze (Iᵤ) liegt.

3. Verfahren nach Anspruch 1,
**dadurch gekennzeichnet, dass**
- das Stromsignal (Iₙ) mit einer oberen Stromgrenze (Iₒ) verglichen und daraus ein viertes Erkennungssignal (E4) abgeleitet wird und
- das vierte Erkennungssignal (E4) mit dem ersten und dem zweiten Erkennungssignal (E1, E2) logisch derart verknüpft wird, dass
die Erzeugung eines Ausgangssignals (A) zur Blockierung des Schutzgerätes (1) verhindert wird, wenn das Stromsignal (Iₙ) oberhalb der oberen Stromgrenze (Iₒ) liegt.

4. Verfahren nach Anspruch 2,
**dadurch gekennzeichnet, dass**
- das Stromsignal (Iₙ) mit einer oberen Stromgrenze (Iₒ) verglichen und daraus ein viertes Erkennungssignal (E4) abgeleitet wird und
- das vierte Erkennungssignal (E4) mit dem ersten und zweiten Erkennungssignal (E1, E2) logisch derart verknüpft wird, dass
die Erzeugung eines Ausgangssignals (A) zur Blockierung des Schutzgerätes (1) auch verhindert wird, wenn das Stromsignal (Iₙ) oberhalb der oberen Stromgrenze (Iₒ) liegt.

5. Verfahren nach einem der vorangehenden Ansprüche,
**dadurch gekennzeichnet, dass** das erste Erkennungssignal (E1) durch einen Vergleich des Spannungssignals (Uₙ) mit einem ersten Schwellwert (Uₛ) gebildet wird.

6. Verfahren nach einem der Ansprüche 1 bis 5, **dadurch gekennzeichnet, dass** bei Erzeugung eines Ausgangssignals (A) zur Blockierung des Schutzgerätes (1) anhand der Erkennungssignale (E1 bis E4) ein Notsignal (N) zur Aktivierung einer Not-Schutzfunktion und/oder ein Meldesignal (M) erzeugt wird.

7. Verfahren nach einem der Ansprüche 1 bis 6, **dadurch gekennzeichnet, dass** bei einem mehrphasigen Leitungsnetz (Lₙ) ein Stromsprung (dI/dt) phasenabhängig erfasst und einer ODER-Verknüpfung zur Erzeugung des zweiten Erkennungssignals (E2) zugeführt wird.

8. Verfahren nach einem der Ansprüche 1 bis 7, **dadurch gekennzeichnet, dass** bei einem dreiphasigen Leitungsnetz (Lₙ) mit isoliertem oder kompensiertem Sternpunkt ein aus einem Vergleich einer Verlagerungsspannung (Uᵥ) mit einem zweiten Schwellwert (Uₑ) ein fünftes Erkennungssignal (E5) erzeugt wird und mit dem ersten Erkennungssignal (E1) logisch derart verknüpft wird, dass bei Überschreiten des Schwellwertes (Uₑ) die Erzeugung eines Ausgangssignals (A) gesperrt wird.

9. Verfahren nach einem der Ansprüche 1 bis 8, **dadurch gekennzeichnet, daß** das anhand der Erkennungssignale (E1 bis E5) erzeugte Ausgangssignal (A) zur Blockierung des Schutzgerätes (1) deaktiviert wird, wenn das Spannungssignal (Uₙ) einen ersten Schwellwert (Uₛ) überschreitet oder das Stromsignal (Iₙ) eine untere Stromgrenze (Iᵤ) unterschreitet oder eine obere Stromgrenze (Iₒ) überschreitet.

10. Schutzgerät für ein elektrisches Leitungsnetz (Lₙ), insbesondere Distanzschutzgerät, dem über einen Meßkreis (2) ein aus der Netzspannung (U_{Ln}) abgeleitetes Spannungssignal (Uₙ) und ein aus dem Leiterstrom (I_{Ln}) abgeleitetes Stromsignal (Iₙ) zugeführt ist, **gekennzeichnet**
**durch** eine mit dem Meßkreis (2) verbundene Überwachungseinrichtung (9), die aus einem aus dem Spannungssignal (Uₙ) abgeleiteten ersten Erkennungssignal (E1) für einen Spannungseinbruch (Un < Us) und aus einem aus dem Stromsignal (Iₙ) abgeleiteten zweiten Erkennungssignal (E2) für einen Stromsprung (dI/dt) ein Ausgangssignal zur Blockierung des Schutzgerätes erzeugt, wenn allein das erste Erkennungssignal (E1) nicht jedoch das zweite Erkennungssignal (E2) auftritt.

11. Schutzgerät nach Anspruch 10, **dadurch gekennzeichnet, daß** die Überwachungseinrichtung (9) ein erstes UND-Glied (20) zur Verknüpfung des ersten Erkennungssignals (E1) und des zweiten Erkennungssignals (E2) aufweist.

12. Schutzgerät nach Anspruch 10 oder 11, **dadurch gekennzeichnet, daß** die Überwachungseinrichtung (9) ein zweites UND-Glied (24) zur Verknüpfung des ersten Erkennungssignals (E1) mit einem aus einer Abweichung des Stromsignals (Iₙ) von einem unteren Schwellwert (Iᵤ) abgeleiteten dritten Erkennungssignal (E3) aufweist.

13. Schutzgerät nach Anspruch 11 oder 12, **dadurch gekennzeichnet, daß** das erste UND-Glied das erste und zweite Erkennungssignal (E1,E2) mit einem aus einer Abweichung des Stromsignals (Iₙ) von einem oberen Schwellwert (Iₒ) abgeleiteten vierten Erkennungssignal (E4) verknüpft.

14. Schutzgerät nach einem der Ansprüche 10 bis 13, **dadurch gekennzeichnet, daß** die Überwachungseinrichtung (9) ein Zeitglied (27) zur Verlängerung des zweiten Erkennungssignals (E2) aufweist.

15. Schutzgerät nach einem der Ansprüche 12 bis 14, **dadurch gekennzeichnet, daß** das erste UND-Glied (20) ausgangsseitig mit einem ODER-Glied (23) verbunden ist, das eingangsseitig mit dem zweiten UND-Glied (24) und ausgangsseitig mit dem ersten UND-Glied (20) verbunden ist.

16. Schutzgerät nach einem der Ansprüche 10 bis 15, **dadurch gekennzeichnet, daß** die Überwachungseinrichtung (9) ausgangsseitig an ein zweites Zeitglied (29) zur zeitlichen Verlängerung eines aus der logischen Verknüpfung abgeleiteten Meldesignals (M) geführt ist.

17. Schutzgerät nach einem der Ansprüche 10 bis 16, **dadurch gekennzeichnet, daß** die Überwachungseinrichtung (9) eine Anzahl von Differenziergliedern (28) zur phasenabhängigen Erfassung des Stromsprungs (dI/dt) umfaßt, wobei bei einem mehrphasigen Leitungsnetz (Lₙ) den Differenziergliedern (28a bis 28c) ein ODER-Glied (30) nachgeschaltet ist.

18. Schutzgerät nach einem der Ansprüche 10 bis 17, **dadurch gekennzeichnet, daß** die Überwachungseinrichtung (9) bei einem mehrphasigen Leitungsnetz (Lₙ) mit isoliertem oder kompensiertem Sternpunkt ein drittes UND-Glied (32) zur Verknüpfung des zweiten Erkennungssignals (E2) mit einem aus einem Vergleich der Verlagerungsspannung (Uᵥ) mit einem zweiten Schwellwert (Uₑ) abgeleiteten fünften Erkennungssignal (E5) aufweist.

## Claims

1. Method for monitoring a protective device (1), in particular a distance protective device, for an electrical line network (Lₙ), in which a voltage signal (Uₙ) is derived from the mains voltage (U_{Ln}) and a current signal (Iₙ) is derived from the line current (I_{Ln}),
**characterized in that**
- in the case of a voltage reduction (Uₙ < Uₛ), a first identification signal (E1) is derived from the voltage signal (Uₙ) and, in the case of a sudden current variation (dI/dt), a second identification signal (E2) is derived from the current signal (Iₙ), and
- the first identification signal (E1) is logically linked to the second identification signal (E2) such that
a trigger signal (A) for blocking the protective device (1) is generated if only the first identification signal (E1), and not the second identification signal (E2), occurs.

2. Method according to Claim 1,
**characterized in that**
- the second identification signal (E2) is extended in time and inverted,
- the current signal (Iₙ) is compared with a lower current limit (Iᵤ) and a third identification signal (E3) is derived from this, and
- the second identification signal (E2) is logically linked to the third identification signal (E3) such that
an output signal (A) for blocking the protective device (1) is prevented from being generated if the current signal (Iₙ) is below the lower current limit (Iᵤ).

3. Method according to Claim 1,
**characterized in that**
- the current signal (Iₙ) is compared with an upper current limit (Iₒ) and a fourth identification signal (E4) is derived from this, and
- the fourth identification signal (E4) is logically linked to the first and the second identification signal (E1, E2) such that
an output signal (A) for blocking the protective device (1) is prevented from being generated if the current signal (Iₙ) is above the upper current limit (Iₒ).

4. Method according to Claim 2,
**characterized in that**
- the current signal (Iₙ) is compared with an upper current limit (Iₒ) and a fourth identification signal (E4) is derived from this, and
- the fourth identification signal (E4) is logically linked to the first and second identification signal (E1, E2) such that
an output signal (A) for blocking the protective device (1) is also prevented from being generated if the current signal (Iₙ) is above the upper current limit (Iₒ).

5. Method according to one of the preceding claims, **characterized in that** the first identification signal (E1) is formed by a comparison of the voltage signal (Uₙ) with a first threshold value (Uₛ).

6. Method according to one of Claims 1 to 5, **characterized in that**, when an output signal (A) for blocking the protective device (1) is generated using the identification signals (E1 to E4), an alarm signal (N) for activating an emergency protection function and/or a notification signal (M) is generated.

7. Method according to one of Claims 1 to 6, **characterized in that**, in the case of a polyphase line network (Lₙ), a sudden current variation (dI/dt) is detected in a phase-dependent manner and fed to an OR logic device in order to generate the second identification signal (E2).

8. Method according to one of Claims 1 to 7, **characterized in that**, in the case of a three-phase line network (Lₙ) having an isolated or compensated star point, a fifth identification signal (E5) is generated from a comparison of a residual voltage (Uᵥ) with a second threshold value (Uₑ) and is logically linked to the first identification signal (E1) such that, when the threshold value (Uₑ) is exceeded, an output signal (A) is prevented from being generated.

9. Method according to one of Claims 1 to 8, **characterized in that** the output signal (A) for blocking the protective device (1) which is generated using the identification signals (E1 to E5) is deactivated if the voltage signal (Uₙ) exceeds a first threshold value (Uₛ) or the current signal (Iₙ) falls below a lower current limit (Iᵤ) or exceeds an upper current limit (Iₒ).

10. Protective device for an electrical line network (Lₙ), in particular a distance protective device which is fed, via a measurement circuit (2), with a voltage signal (Uₙ) derived from the mains voltage (U_{Ln}) and a current signal (Iₙ) derived from the line current (I_{Ln}), **characterized by** a monitoring device (9) which is connected to the measurement circuit (2) and generates an output signal for blocking the protective device, from a first identification signal (E1) derived from the voltage signal (Uₙ) for a voltage reduction (Uₙ < Uₛ) and from a second identification signal (E2) derived from the current signal (Iₙ) for a sudden current variation (dI/dt), if only the first identification signal (E1), and not the second identification signal (E2), occurs.

11. Protective device according to Claim 10, **characterized in that** the monitoring device (9) has a first AND gate (20) for logically linking the first identification signal (E1) and the second identification signal (E2).

12. Protective device according to Claim 10 or 11, **characterized in that** the monitoring device (9) has a second AND gate (24) for logically linking the first identification signal (E1) to a third identification signal (E3) derived from a discrepancy between the current signal (Iₙ) and a lower threshold value (Iᵤ).

13. Protective device according to Claim 11 or 12, **characterized in that** the first AND gate logically links the first and second identification signal (E1, E2) to a fourth identification signal (E4) derived from a discrepancy between the current signal (Iₙ) and an upper threshold value (Iₒ).

14. Protective device according to one of Claims 10 to 13, **characterized in that** the monitoring device (9) has a timer (27) for extending the second identification signal (E2).

15. Protective device according to one of Claims 12 to 14, **characterized in that** the first AND gate (20) is connected on the output side to an OR gate (23), which is connected on the input side to the second AND gate (24) and on the output side to the first AND gate (20).

16. Protective device according to one of Claims 10 to 15, **characterized in that** the monitoring device (9) is connected on the output side to a second timer (29) for extending in time a notification signal (M) derived from the logical linking.

17. Protective device according to one of Claims 10 to 16, **characterized in that** the monitoring device (9) comprises a number of differentiation elements (28) for detecting the sudden current variation (dI/dt) in a phase-dependent manner, in which, in the case of a polyphase line network (Lₙ), an OR gate (30) is connected downstream of the differentiation elements (28a to 28c).

18. Protective device according to one of Claims 10 to 17, **characterized in that**, in the case of a polyphase line network (Lₙ) having an isolated or compensated star point, the monitoring device (9) has a third AND gate (32) for logically linking the second identification signal (E2) to a fifth identification signal (E5) derived from a comparison of the residual voltage (Uᵥ) with a second threshold value (Uₑ).

## Revendications

1. Procédé pour la surveillance d'un appareil de protection (1), notamment d'un appareil de protection à distance, pour un réseau de conducteurs électriques (Lₙ), dans lequel un signal de tension (Uₙ) est déduit de la tension de réseau (U_{Ln}) et un signal de courant (Iₙ) est déduit du courant de conducteur (I_{Ln}),
**caractérisé par le fait que**
- lors d'une chute de tension (Uₙ < Uₛ), on déduit du signal de tension (Uₙ) un premier signal de détection (E1) et, lors d'une saute de courant (dl / dt), on déduit du signal de courant (Iₙ) un deuxième signal de détection (E2), et
- on combine logiquement le premier signal de détection (E1) au deuxième signal de détection (E2) de telle sorte que
on produit un signal de déclenchement (A) destiné au blocage de l'appareil de protection (1) lorsque seul le premier signal de détection (E1) apparaît mais pas le deuxième signal de détection (E2).

2. Procédé selon la revendication 1,
**caractérisé par le fait que**
- on prolonge dans le temps et on inverse le deuxième signal de détection (E2),
- on compare le signal de courant (Iₙ) à une limite inférieure de courant (Iᵤ) et on déduit de là un troisième signal de détection (E3), et
- on combine logiquement le deuxième signal de détection (E2) au troisième signal de détection (E3) de telle sorte que
on empêche la production d'un signal de sortie (A) destiné au blocage de l'appareil de protection (1) lorsque le signal de courant (Iₙ) est inférieur à la limite inférieure de courant (Iᵤ).

3. Procédé selon la revendication 1,
**caractérisé par le fait que**
- on compare le signal de courant (Iₙ) à une limite supérieure de courant (Iₒ) et on déduit de là un quatrième signal de détection (E4), et
- on combine logiquement le quatrième signal de détection (E4) au premier et au deuxième signal de détection (E1, E2) de telle sorte que
on empêche la production d'un signal de sortie (A) destiné au blocage de l'appareil de protection (1) lorsque le signal de courant (Iₙ) est supérieur à la limite supérieure de courant (Iₒ).

4. Procédé selon la revendication 2,
**caractérisé par le fait que**
- on compare le signal de courant (Iₙ) à une limite supérieure de courant (Iₒ) et on déduit de là un quatrième signal de détection (E4), et
- on combine logiquement le quatrième signal de détection (E4) au premier et au deuxième signal de détection (E1, E2) de telle sorte que
on empêche la production d'un signal de sortie (A) destiné au blocage de l'appareil de protection (1) lorsque le signal de courant (Iₙ) est supérieur à la limite supérieure de courant (Iₒ).

5. Procédé selon l'une des revendications précédentes, **caractérisé par le fait qu'**on forme le premier signal de détection (E1) en comparant le signal de tension (Uₙ) à une première valeur de seuil (Uₛ).

6. Procédé selon l'une des revendications 1 à 5, **caractérisé par le fait que**, lors de la production d'un signal de sortie (A) destiné au blocage de l'appareil de protection (1) à l'aide des signaux de détection (E1 à E4), on produit un signal de secours (N), destiné à activer une fonction de protection de secours, et/ou un signal d'avertissement (M).

7. Procédé selon l'une des revendications 1 à 6, **caractérisé par le fait que**, dans le cas d'un réseau de conducteurs polyphasé (Lₙ), on détecte une saute de courant (dl / dt) en fonction des phases et on l'envoie à une combinaison OU pour la production du deuxième signal de détection (E2).

8. Procédé selon l'une des revendications 1 à 7, **caractérisé par le fait que**, dans le cas d'un réseau de conducteurs triphasé (Lₙ) avec neutre isolé ou compensé, on produit un cinquième signal de détection (E5) à partir d'une comparaison entre une tension de décalage (Uᵥ) et une deuxième valeur de seuil (Uₑ) et on le combine logiquement au premier signal de détection (E1) de telle sorte que, lors du dépassement de la valeur de seuil (Uₑ), la production d'un signal de sortie (A) est bloquée.

9. Procédé selon l'une des revendications 1 à 8, **caractérisé par le fait qu'**on désactive le signal de sortie (A) produit à l'aide des signaux de détection (E1 à E5) et destiné au blocage de l'appareil de protection (1) lorsque le signal de tension (Uₙ) est supérieur à une première valeur de seuil (Uₛ) ou lorsque le signal de courant (Iₙ) est inférieur à une limite inférieure de courant (Iᵤ) ou est supérieur à une limite supérieure de courant (Iₒ).

10. Appareil de protection pour un réseau de lignes électriques (Lₙ), notamment appareil de protection à distance, auquel sont envoyés par l'intermédiaire d'un circuit de mesure (2) un signal de tension (Uₙ) déduit de la tension de réseau (U_{Ln}) et un signal de courant (Iₙ) déduit du courant de conducteur (I_{Ln}), **caractérisé par** un dispositif de surveillance (9) qui est relié au circuit de mesure (2) et qui produit à partir d'un premier signal de détection (E1) déduit du signal de tension (Uₙ), pour une chute de tension (Uₙ < Uₛ), et à partir du deuxième signal de détection (E2) déduit du signal de courant (Iₙ), pour une saute de courant (dl / dt), un signal de sortie destiné au blocage de l'appareil de protection lorsque seul le premier signal de détection (E1) apparaît mais pas le deuxième signal de détection (E2).

11. Appareil de protection selon la revendication 10, **caractérisé par le fait que** le dispositif de surveillance (9) comporte un premier élément ET (20) pour la combinaison du premier signal de détection (E1) et du deuxième signal de détection (E2).

12. Appareil de protection selon la revendication 10 ou 11, **caractérisé par le fait que** le dispositif de surveillance (9) comporte un deuxième élément ET (24) pour la combinaison du premier signal de détection (E1) et d'un troisième signal de détection (E3) déduit d'un écart entre le signal de courant (Iₙ) et une valeur de seuil inférieure (Iᵤ).

13. Appareil de protection selon la revendication 11 ou 12, **caractérisé par le fait que** le premier élément ET combine le premier et le deuxième signal de détection (E1, E2) à un quatrième signal de détection (E4) déduit de l'écart entre le signal de courant (Iₙ) et une valeur de seuil supérieure (Iₒ).

14. Appareil de protection selon l'une des revendications 10 à 13, **caractérisé par le fait que** le dispositif de surveillance (9) comporte un temporisateur (27) pour prolonger le deuxième signal de détection (E2).

15. Appareil de protection selon l'une des revendications 12 à 14, **caractérisé par le fait que** le premier élément ET (20) est relié en sortie à un élément OU (23) qui est relié en entrée au deuxième élément ET (24) et en sortie au premier élément ET (20).

16. Appareil de protection selon l'une des revendications 10 à 15, **caractérisé par le fait que** le dispositif de surveillance (9) est envoyé en sortie à un deuxième temporisateur (29) pour prolonger temporellement un signal d'avertissement (M) déduit de la combinaison logique.

17. Appareil de protection selon l'une des revendications 10 à 16, **caractérisé par le fait que** le dispositif de surveillance (9) comprend un certain nombre d'éléments différentiateurs (28) pour la détection, dépendante des phases, de la saute de courant (dl / dt), un élément OU (30) étant branché du côté aval des éléments différentiateurs (28a à 28c) dans le cas d'un réseau de lignes polyphasé (Lₙ).

18. Appareil de protection selon l'une des revendications 10 à 17, **caractérisé par le fait que** le dispositif de surveillance (9) dans le cas d'un réseau de lignes polyphasé (Lₙ) avec neutre isolé ou compensé comporte un troisième élément ET (32) pour la combinaison du deuxième signal de détection (E2) et d'un cinquième signal de détection (E5) déduit d'une comparaison entre la tension de décalage (Uᵥ) et une deuxième valeur de seuil (Uₑ).
